(19) Europäisches Patentamt
European Patent Office
Office européen des brevets

(11) **EP 2 339 687 A1**

(12) **EUROPEAN PATENT APPLICATION**

(43) Date of publication:
29.06.2011 Bulletin 2011/26

(51) Int Cl.:
*H01M 10/50* (2006.01)   *H01M 10/42* (2006.01)
*H01M 10/44* (2006.01)

(21) Application number: 10173259.2

(22) Date of filing: 18.08.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 28.12.2009 JP 2009296660

(71) Applicant: Hitachi Ltd.
Tokyo 100-8280 (JP)

(72) Inventor: Honkua, Kohei
Chiyoda-ku
Tokyo 100-8220 (JP)

(74) Representative: MERH-IP
Matias Erny Reichl Hoffmann
Paul-Heyse-Strasse 29
80336 München (DE)

(54) **Protection circuits for secondary batteries**

(57) A protection circuit of a secondary battery 1 includes a thermal switching element which has an resistance that decreases along with increase of temperature and which is connected in parallel with the secondary battery 1.

FIG.1

EP 2 339 687 A1

**Description**

The disclosure of the following priority application is hereby incorporated herein by reference: Japanese Patent Application No. 2009-296660 filed December 28, 2009.

The present invention relates to a secondary battery protection circuit and to a secondary battery protection circuit that can sense the high temperature state of the secondary batteries so that they can be used stably. The present invention is particularly related to a lithium ion battery protection circuit.

Secondary batteries such as secondary lithium ion batteries and so on are widely fitted to portable devices. In recent years, along with the range of application of secondary lithium ion batteries becoming wider, and as they get bigger, demands for ensuring and enhancing their security are becoming more emphatic. If a lithium ion secondary battery is continuously overheated or continuously overcharged in a state that the depth of charge is large, there is a possibility to exceed a predetermined temperature.

Due to this, usually a lithium ion secondary battery is applied by being built up into a battery pack that is equipped with a protection circuit that prevents overcharging. Accordingly, in for example Japanese Laid-Open Patent Publication 2009-131023, a method is proposed in which, as such a protection circuit, a positive temperature coefficient thermistor (hereinafter termed a PTC thermistor) and a current detection circuit are connected in series with the lithium ion secondary battery, so that the electrical resistance is increased when the temperature becomes high during charging, thus preventing further charging.

And, with a lithium ion secondary battery protection circuit according to the prior art, a method is adopted of turning off a switch connected in series with the lithium ion secondary battery when overcharging takes place, so that further charging is prevented. This type of method is effective for preventing overcharging, but, since the lithium ion secondary battery is left as it is in the charged state, if the temperature around it rises further, then there is a possibility to exceed a predetermined temperature, and it is desirable to reduce this possibility further.

An object of the present invention is to provide a secondary battery protection circuit that can prevent overcharging of a lithium ion secondary battery, and that can further reduce the possibility to exceed a predetermined temperature when the battery temperature becomes elevated.

According to the 1 st aspect of the present invention, a protection circuit of a secondary battery comprises a thermal switching element which has an resistance that decreases along with increase of temperature and which is connected in parallel with the secondary battery.

According to the 2nd aspect of the present invention, a protection circuit of a secondary battery according to the 1 st aspect further comprises at least one diode electrically connected in series with the thermal switching element.

According to the 3rd aspect of the present invention, a protection circuit of a secondary battery according to the 1 st or 2nd aspect further comprises at least one resistance element electrically connected in series with the thermal switching element

According to the 4th aspect of the present invention, in a protection circuit of a secondary battery according to any one of 1 st through 3rd aspects, it is preferred that the thermal switching element is a critesistor whose electrical resistance decreases abruptly at or above a predetermined temperature.

According to the 5th aspect of the present invention, in a protection circuit of a secondary battery according to any one of the 1 st through 3rd aspects, it is preferred that the thermal switching element is a negative temperature coefficient thermistor that has a negative temperature coefficient.

According to the 6th aspect of the present invention, in a protection circuit of a secondary battery according to any one of the 1 st through 3rd aspects, it is preferred that the thermal switching element is a bimetallic thermostat that goes to ON at or above a predetermined temperature.

According to the 7th aspect of the present invention, in a protection circuit of a secondary battery according to any one of the 1 st through 6th aspects, it is preferred that the thermal switching element is provided in the interior of a battery case.

According to the 8th aspect of the present invention, in a protection circuit of a secondary battery according to the 2nd aspect, it is preferred that a plurality of the diodes necessary to achieve a predetermined discharge termination voltage for the secondary battery during operation of the protection circuit.

According to the 9th aspect of the present invention, in a protection circuit of a secondary battery according to the 3rd aspect, it is preferred that said resistance element has a resistance value that defines a predetermined discharge current of the secondary battery during operation of the protection circuit.

According to the 10th aspect of the present invention, a secondary battery comprises, internal to the battery case, a battery case and a protection circuit of a secondary battery according to any one of the 1st through 9th aspects.

BRIEF DESCRIPTION OF THE DRAWINGS

Fig. 1 is a figure showing a protection circuit according to a first embodiment, that incorporates a CTR thermistor and a resistance element;

Fig. 2 is a figure showing the characteristics of electrical resistance versus temperature of a CTR thermistor, an NTC thermistor, and a PTC thermistor;

Fig. 3 is a figure showing a figure showing a protection circuit according to a second embodiment, that incorporates an NTC thermistor;

Fig. 4 is a figure showing a protection circuit according to a third embodiment, that incorporates a bimetallic thermal switch and a resistance element;

Fig. 5 is a figure showing a fourth embodiment in which the protection circuit is installed at an upper portion of the battery;

Fig. 6 is a figure showing a fifth embodiment in which the protection circuit is installed at a side surface of the battery; and

Fig. 7 is a figure showing a sixth embodiment in which the protection circuit is installed interior to the battery.

DESCRIPTION OF THE PREFERRED EMBODIMENTS

In the following, various embodiments of the present invention will be explained with reference to the drawings.

<Embodiment 1>

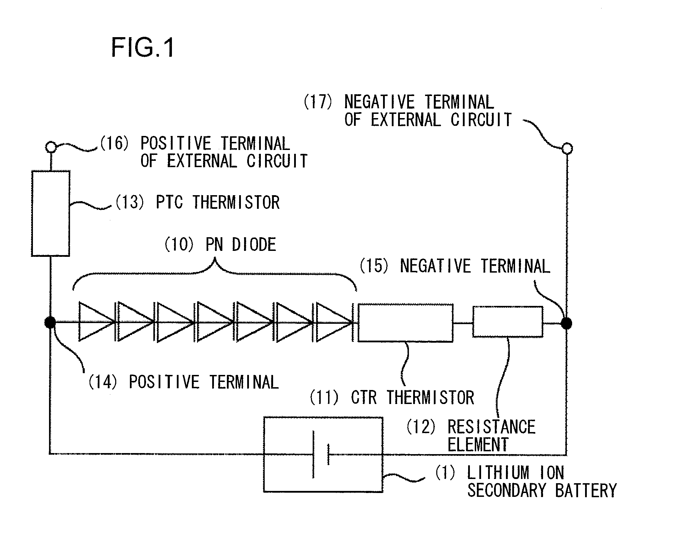

Fig. 1 is a figure showing a protection circuit according to this first embodiment that incorporates a CTR thermistor and a resistance element. In Fig. 1, a series circuit of seven PN diodes (10), a CTR thermistor (11), and a resistance element (12) is connected in parallel with a lithium ion secondary battery (1).

The positive electrode of the lithium ion secondary battery (1) is connected to the positive terminal (14) of this parallel circuit by a connecting wire. And the negative electrode of the lithium ion secondary battery (1) is connected to the negative terminal (15) of the parallel circuit by a connecting wire.

Furthermore, the positive terminal of the lithium ion secondary battery (1) is connected in series with a PTC thermistor (13), and is then connected to a positive terminal (16) of an external circuit. Moreover, the negative terminal of the lithium ion secondary battery (1) is connected to the negative terminal (17) of the external circuit.

As the temperature rises within a range of several °C in the vicinity of a predetermined temperature, the electrical resistance of the CTR thermistor (11) decreases by around two orders of magnitude, and the switch constituted by this protection circuit, i.e. by the series circuit of the PN diodes (10), the CTR thermistor (11), and the resistance element (12), goes to ON. Moreover, the electrical resistance of the PN diodes(10) decreases above a predetermined voltage value, so that the switch constituted by this protection circuit goes to ON. It is to be noted that the CTR thermistor is referred also as critesistor.

Accordingly, current flows through this protection circuit only when the lithium ion secondary battery (1) is at or above a predetermined temperature and moreover is at or above a predetermined voltage. At this time, the resistance value of the resistance element (12) is determined so that the current value during the operation of this protection circuit is adjusted, and so that no excessively great current flows in the PN diodes (10) and the CTR thermistor (11).

Furthermore, in the vicinity of its Curie temperature, the electrical resistance of the PTC thermistor (13) increases by three to seven orders of magnitude, so that, at temperatures equal to or greater than that Curie temperature, the circuit consisting of the parallel connection of the lithium ion secondary battery (1) and the series circuit of the PN diodes (10), the CTR thermistor (11) and the resistance element (12) is cut off from the external circuit.

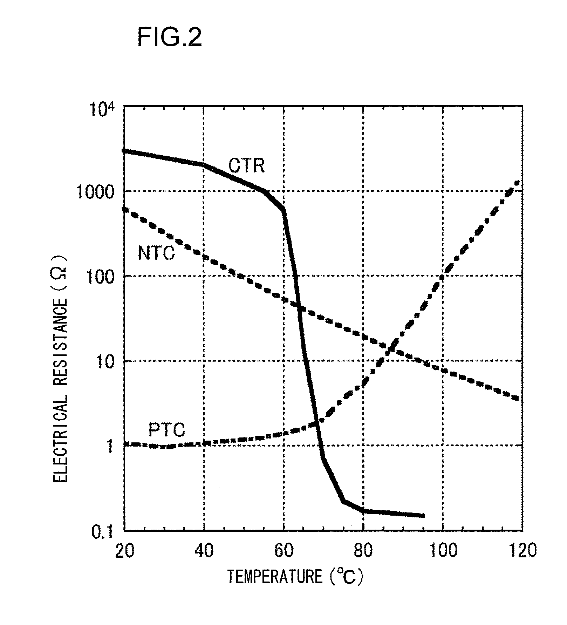

The characteristics of the electrical resistance of a CTR thermistor, an NTC thermistor, and a PTC thermistor with respect to temperature are as shown in Fig. 2. In other words, Fig. 2 is a figure showing the characteristics of electrical resistance versus temperature of a CTR thermistor, an NTC thermistor, and a PTC thermistor. It will be understood that, as shown in Fig. 2, the electrical resistance of the CTR thermistor drops abruptly near the temperature of 60°C, while the electrical resistance of the PTC thermistor rises near the temperature of 70°C. Due to this, the lithium ion secondary battery spontaneously discharges itself at high temperature, and thus it is possible further to reduce the possibility to exceed a predetermined temperature, i.e. a bare possibility of thermal runaway is removed.

A design example of the protection circuit shown in Fig. 1 will now be described.

First, the operational temperature for the protection circuit is set, and from this the type of CTR thermistor to be used is determined. For example, it may be supposed that the normal usage temperature of the battery is 50°C or below, and that it is desired for the protection circuit to operate at 70°C or above. In this case, as the CTR thermistor, a CTR thermistor may be used that has, for example, the temperature characteristics that: its resistance value is $10^3$ $\Omega$, or more at or below 50°C; its resistance value drops abruptly in the region from 65°C to 70°C; and its resistance value is 1 $\Omega$, or less at 70°C and above. This kind of temperature characteristic for a CTR thermistor may be obtained by using a vanadium oxide type CTR thermistor.

Next, the discharge termination voltage of the battery to be protected is set, and from this the type and the number N of diodes to be connected in series are determined. For example it will be supposed that, during operation of the protection circuit, it is desired to discharge the battery down to around 3.3 V In this case, if it is supposed that, as the diodes, conventional PN junction diodes made from silicon whose forward voltage is given, for example, by 0.6 - 2.5 x $10^{-3}$ (T-20) (volts) at a temperature of T (°C) are used, then the forward voltage at 70°C ofN diodes is given by:

$$\{0.6 - 2.5 \times 10^{-3}(70\text{-}20)\} \times N = 0.475 \, N \text{ (volts)}.$$

Accordingly, since N = 3.3/0.475 ≈ 7, it will be sufficient to connect seven of these diodes in series in the thermal switching element.

Next, the value of the discharge current during operation of the protection circuit is set, and from this the resistance value R of the resistance element is determined. For example, it may be supposed that it is desired to discharge the battery at around 0.1 A during the operation of the protection circuit. When for example the voltage of the battery at full charge is 4.2 V, the voltage drop due to the diodes during operation of the protection circuit is around 3.3 V as described above, and, since the resistance of the CTR thermistor is around 1 Ω, accordingly the discharge current I at full charge is given by

$$I \approx (4.2\text{-}3.3)/(1\text{+}R).$$

Accordingly, since R=8 when I=0.1 A, at 70°C a resistance element having a resistance of around 8 Ω should be connected in series with the thermal switching elements and the diodes.

It should be understood that, because the forward voltage of the diodes is {0.6 - 2.5 x $10^{-3}$(50-20)} x 7 = 3.675 (volts) and the resistance of the CTR thermistor is around $10^3$ Ω as described above, accordingly the self-discharge current through the protection circuit at the upper limit 50°C of the normal temperature region is given by I ≈ (4.2 - 3.675) /1000 ≈ 0.5 (mA), so that there is almost no problem in the case of a battery that has a capacity of around 1 Ah or more.

Finally, the temperature for cutoff of the parallel circuit of the battery and the protection circuit from the external circuit is determined, and the type of the thermal switching element to be used is determined in order to attain this objective. For example, if the cutoff temperature of the battery from the external circuit is determined to be around 100°C, then, if a barium titanate type PTC thermistor is used, then a thermal switching element may be obtained that has a temperature characteristic of around 1 Ω at less than or equal to 60°C, around 10 Ω at 85°C, around $10^2$ Ω at 100°C, and around $10^3$ Ω at 120°C.

<Embodiment 2>

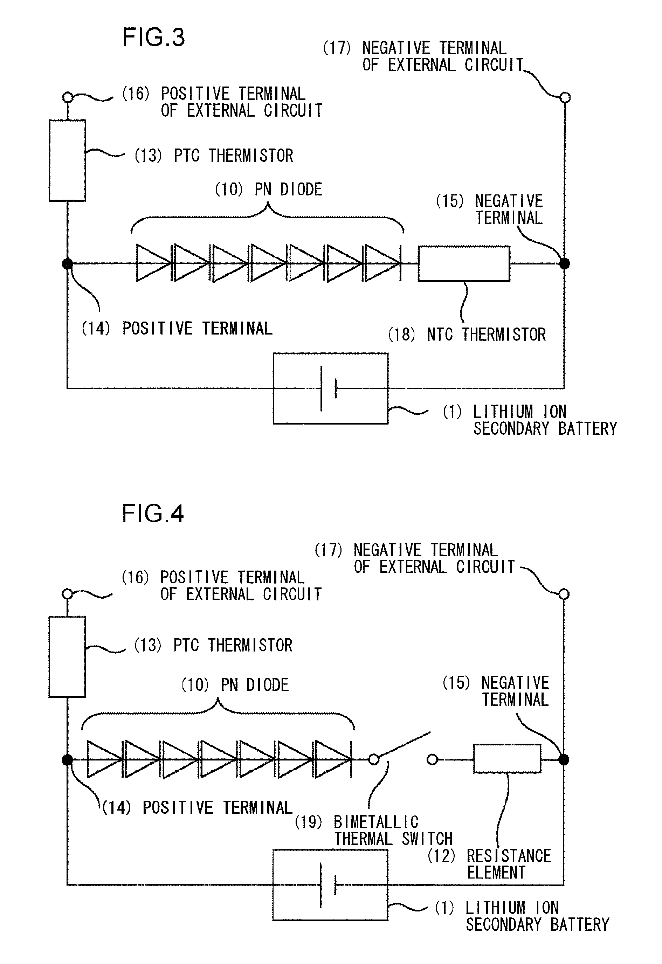

Fig. 3 is a figure showing a protection circuit according to a second embodiment, that incorporates an NTC thermistor. This second embodiment will now be explained with reference to Fig. 3. In Fig. 3, a series circuit of seven PN diodes (10) and an NTC thermistor (18) is connected in parallel with a lithium ion secondary battery (1).

The positive electrode of the lithium ion secondary battery (1) is connected by a connecting wire to the positive terminal (14) of this parallel circuit, and the negative electrode of the lithium ion secondary battery (1) is connected by a connecting wire to the negative terminal (15) of the parallel circuit. Furthermore, the positive terminal of the lithium ion secondary battery (1) is connected in series with a PTC thermistor (13), and is then connected to a positive terminal (16) of an external circuit. Moreover, the negative terminal of the lithium ion secondary battery (1) is connected to the negative terminal (17) of the external circuit.

The NTC thermistor (18) is a negative temperature coefficient thermistor that has a negative temperature coefficient, and its electrical resistance decreases exponentially as the temperature increases, so that the switch constituted by this protection circuit (the PN diodes and the NTC thermistor) goes to ON. Furthermore, the electrical resistance of the PN diodes (10) decreases at and above a predetermined voltage, so that the switch constituted by this protection circuit goes to ON.

Accordingly, current flows through this protection circuit only when the lithium ion secondary battery (1) is at or above a predetermined temperature and moreover is at or above a predetermined voltage.

Furthermore, in the vicinity of its Curie temperature, the electrical resistance of the PTC thermistor (13) increases by three to seven orders of magnitude, so that, at temperatures equal to or greater than that Curie temperature, the circuit consisting of the parallel connection of the lithium ion secondary battery (1) and the series circuit of the PN diodes (10) and the NTC thermistor (18) is cut off from the external circuit.

The characteristics of the electrical resistance of an NTC thermistor and a PTC thermistor with respect to temperature are as shown in Fig. 2. In other words, Fig. 2 is a figure showing the characteristics of electrical resistance versus temperature of a CTR thermistor, an NTC thermistor, and a PTC thermistor. It will be understood that, as shown in Fig. 2, the electrical resistance of the NTR thermistor decreases along with increase of temperature, and also that the electrical resistance of the PTC thermistor rises near the temperature of 70°C. Due to this, the lithium ion secondary battery spontaneously discharges at high temperature, and thus it is possible further to reduce the possibility to exceed a predetermined temperature.

A design example of the protection circuit shown in Fig. 3 will now be described.

First, the operational temperature for the protection circuit is set, and from this the type of NTC thermistor to be used is determined. For example, it may be supposed that the normal usage temperature of the battery is 50°C or below, and that it is desired for the protection circuit to operate at 90°C or above. When the electrical resistance of the NTC thermistor at the temperature T (°C) is termed RT and its electrical resistance at the temperature of 25°C is termed R25, then RT is given by:

$$RT = R25 \ x \ exp[B\{1/(T+273.15) -1/ (25+273.15)\}]$$

The value of B is around 1000 to 6000 (K). For example, the value of B for an NTC thermistor made from a mixture of vanadium oxide, tungsten oxide, and phosphorus oxide is 5000 to 6000. For example, in the case of an NTC thermistor for which B=6000, its electrical resistance R90 at 90°C is equal to R25 x 0.0273. R25 is determined so that this R90 has the desired value. The way in which R25 is determined will be explained hereinafter.

Next, the discharge termination voltage of the battery to be protected is set, and from this the type and the number N of PN diodes to be connected in series are determined. For example it will be supposed that, during operation of the protection circuit, it is desired to discharge the battery down to around 3.0 V In this case, if it is supposed that, as the diodes, conventional PN junction diodes made from silicon whose forward voltage is given, for example, by 0.6 - 2.5 x $10^{-3}$ (T-20) (volts) at a temperature of T (°C) are used, then the forward voltage at 90°C ofN diodes is given by:

$$\{0.6 - 2.5 \ x \ 10^{-3}(90-20)\} \ x \ N = 0.425 \ N \ (volts).$$

Accordingly, since N = 3.0/0.425 ≈ 7, it will be sufficient to connect seven of these PN diodes in series in the thermal switching element.

Next, the value of the discharge current during operation of the protection circuit is set, and from this the resistance value R25 of the NTC thermistor is determined. For example, it may be supposed that it is desired to discharge the battery at around 0.1 A during the operation of the protection circuit. When for example the voltage of the battery at full charge is 4.2 V, the voltage drop due to the diodes during operation of the protection circuit is around 3.0 V as described above, and, since the resistance of the NTC thermistor is R90, accordingly the discharge current I at full charge is given by I ≈ (4.2-3.0)/(R90).

Accordingly, R90=12 when I=0.1 A. Since, from the equation described above, R25 = R90/0.00273 ≈ 440, accordingly an NTC thermistor having a resistance of around 440 Ω at 25°C may be used for this thermal switch.

It should be understood that, because the forward voltage of the diodes is {0.6 - 2.5 x $10^{-3}$(50-20)} x 7 = 3.675 (volts) and the resistance R50 of the NTC thermistor at 50°C, from the equation described above, is R50 = R25 x exp(6000/323.15 - 6000/298.15) = R25 x 0.211 ≈ 93 Ω, accordingly the self-discharge current through the protection circuit at the upper limit 50°C of the normal temperature region is given by I ≈ (4.2 - 3.675)/93 ≈ 5.6 (mA), so that there is almost no problem in the case of a battery that has a capacity of around 1 Ah or more.

Finally, the temperature for cutoff of the parallel circuit of the battery and the protection circuit from the external circuit is determined, and the type of the thermal switching element to be used is determined in order to attain this objective. For example, if the cutoff temperature of the battery from the external circuit is determined to be around 100°C, and if a barium titanate type PTC thermistor is used, then a thermal switching element may be obtained that has a temperature characteristic of around 1 Ω at less than or equal to 60°C, around 10 Ω at 85°C, around $10^2$ Ω at 100°C, and around $10^3$ Ω at 120°C.

<Embodiment 3>

Fig. 4 is a figure showing a protection circuit according to a third embodiment, that incorporates a bimetallic thermal switch and a resistance element. This third embodiment will now be explained with reference to Fig. 4. In Fig.

4, a series circuit of seven PN diodes (10), a bimetallic thermal switch (19) and a resistance element (12) is connected in parallel with a lithium ion secondary battery (1).

The positive electrode of the lithium ion secondary battery (1) is connected by a connecting wire to the positive terminal (14) of this parallel circuit, and the negative electrode of the lithium ion secondary battery (1) is connected by a connecting wire to the negative terminal (15) of the parallel circuit. Furthermore, the positive terminal of the lithium ion secondary battery (1) is connected in series with a PTC thermistor (13), and is then connected to a positive terminal (16) of an external circuit. Moreover, the negative terminal of the lithium ion secondary battery (1) is connected to the negative terminal (17) of the external circuit.

The bimetallic thermal switch (19) is a thermal switching element in which metallic plates of two types that have different coefficients of thermal expansion are glued together, and that takes advantage of the characteristic that, along with change of the temperature, the shape of these glued together metallic plates changes so as to warp to one side; and this bimetallic thermal switch goes into its closed state at or above a predetermined temperature, so that the protection circuit (consisting of the PN diodes (10), the bimetallic thermal switch (19), and the resistance element (12)) goes to ON. Furthermore, the electrical resistance of the PN diodes (10) decreases at and above a predetermined voltage, so that the switch constituted by this protection circuit goes to ON.

Accordingly, current flows through this protection circuit only when the lithium ion secondary battery (1) is at or above a predetermined temperature and moreover is at or above a predetermined voltage. At this time, the resistance value of the resistance element (12) is determined so that the value of the current that flows in the protection circuit is adjusted, and so that no excessively great current flows the PN diodes (10) and the bimetallic thermal switch (19).

Furthermore, in the vicinity of its Curie temperature, the electrical resistance of the PTC thermistor (13) increases by three to seven orders of magnitude, so that, at temperatures equal to or greater than that Curie temperature, the circuit consisting of the parallel connection of the lithium ion secondary battery (1) and the series circuit of the PN diodes (10), the bimetallic thermal switch (19), and the resistance element (12) is cut off from the external circuit.

A design example of the protection circuit shown in Fig. 4 will now be described.

First, the operational temperature for the protection circuit is set, and from this the type of bimetallic thermal switch to be used is determined. For example, it may be supposed that the normal usage temperature of the battery is 50°C or below, and that it is desired for the protection circuit to operate at 80°C or above. This type of operating temperature may be obtained with a bimetallic thermal switch that employs a conventional alloy of iron and nickel, and a metallic alloy in which manganese, chromium, copper or the like is added to an alloy of iron and nickel. For example, it may be supposed that a thermal switch is employed that goes into its opened state at normal temperatures and that goes into its closed state at and above 80°C, and whose resistance in the open state is 100 MΩ or greater while its resistance in the closed state is 50 mΩ or less.

Next, the discharge termination voltage of the battery to be protected is set, and from this the type and the number N of PN diodes to be connected in series are determined. For example it will be supposed that, during operation of the protection circuit, it is desired to discharge the battery down to around 3.2 V In this case, if it is supposed that, as the diodes, conventional PN junction diodes made from silicon whose forward voltage is, for example, $0.6 - 2.5 \times 10^{-3}$ (T-20) (volts) at a temperature of T (°C) are used, then the forward voltage at 80°C ofN diodes is given by:

$$\{0.6 - 2.5 \times 10^{-3}(80-20)\} \times N = 0.455 \, N \, (\text{volts}).$$

Accordingly, since N = 3.2/0.455 ≈ 7, it will be sufficient to connect seven of these PN diodes in series in the thermal switching element.

Next, the value of the discharge current during operation of the protection circuit is set, and from this the resistance value R of the resistance element is determined. For example, it may be supposed that it is desired to discharge the battery at around 0.1 A during the operation of the protection circuit. When for example the voltage of the battery at full charge is 4.2 V, the voltage drop due to the diodes during operation of the protection circuit is around 3.2 V as described above, and, since the resistance of the thermal switching element is 50 mΩ or less, accordingly the discharge current I at full charge is given by I ≈ (4.2-3.2)/(R+0.05).

Accordingly, since R=10 when I=0.1 A, thus a resistance element having a resistance of around 10 Ω at 80°C may be connected in series with the thermal switching element and the diodes. As for the self-discharge current through the protection circuit in the normal temperature region, the resistance of the thermal switching element in its opened state is 100 MΩ, or more, and accordingly no problem will occur.

Finally, the temperature for cutoff of the parallel circuit of the battery and the protection circuit from the external circuit is determined, and the type of the thermal switching element to be used is determined in order to attain this objective. For example, if the cutoff temperature of the battery from the external circuit is determined to be around 100°C, and if a titanium oxide - barium type PTC thermistor is used, then a thermal switching element may be obtained that has a temperature characteristic of around 1 Ω at less than or equal to 60°C, around 10 Ω at 85°C, around $10^2$ Ω at 100°C, and around $10^3$ Ω at 120°C.

<Embodiment 4>

As described above, the objective of the protection circuits shown in the above embodiments is that spontaneous electrical discharge of the battery should be caused to take place when the battery temperature increases, due to the electrical resistance of the thermal switch decreasing because its temperature has increased. Accordingly, it is necessary for the temperature of the thermal switching element to change so that it tracks the temperature of the battery. For this purpose, it is desirable for good thermal contact between the protection circuit and the battery to be established. Embodiments of positions for installation of the protection circuit in order to establish this good thermal contact are shown in the following reference examples.

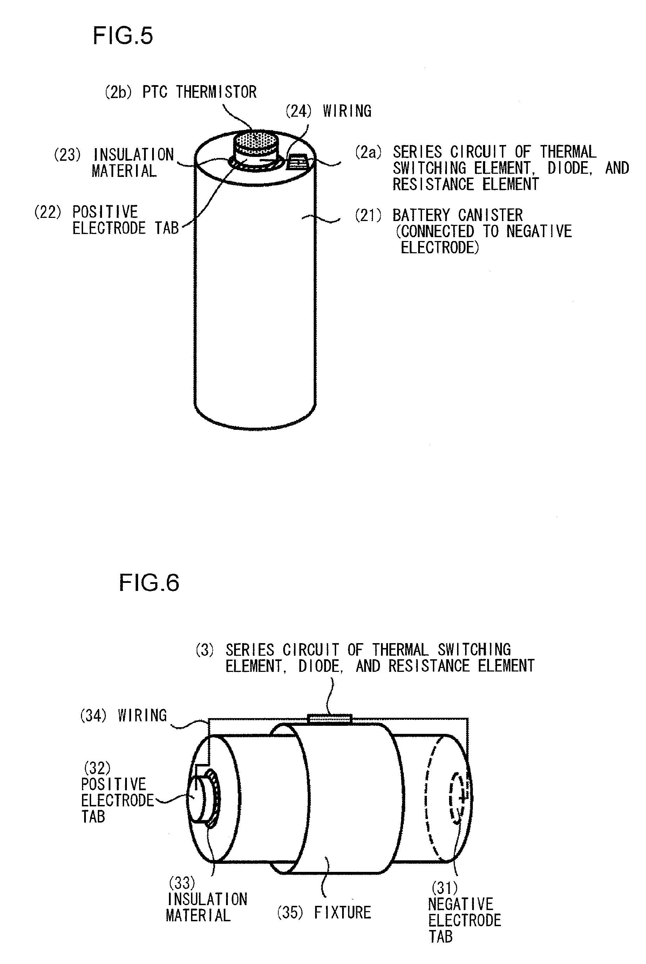

Fig. 5 shows a reference example of one position where this protection circuit may be installed, in a fourth embodiment of the present invention.

The bottom surface, the side surface, and the outer edge portion of the upper surface of a cylindrical canister (21) of the battery are electrically connected to the negative electrode of the battery. Furthermore, the positive electrode of the battery is connected to the central portion of the upper surface of the canister (21). A positive electrode tab (22) is provided at this upper surface central portion, and this positive electrode tab (22) is insulated from the battery canister (21) by insulating material (23).

Moreover, in the protection circuit, the positive terminal (14) of the series circuit (2a) of the thermal switching element, the diodes, and the resistance element is electrically connected to the positive electrode tab (22) by a wire (24). And the negative terminal (15) of the series circuit (2a) is installed to the upper surface of the battery canister (21) and is thermally and also electrically connected to the battery canister (21). Furthermore, the PTC thermistor (2b) is contacted to the positive electrode tab (21), and the positive electrode tab (21) is electrically connected to the external circuit only via this PTC thermistor (2b).

By installing the protection circuit in this manner, it is possible to sense the temperature state of the battery in an effective manner.

<Embodiment 5>

Fig. 6 shows another reference example of a position where the protection circuit may be installed, in a fifth embodiment of the present invention.

The bottom surface, the side surface, and the outer edge portion of the upper surface of the cylindrical battery canister are electrically connected to the negative electrode of the battery. Furthermore, a negative electrode tab (31) is provided at the central portion of the bottom surface of the canister. Moreover a positive electrode tab (32) is provided at the upper surface central portion, and this positive electrode tab (32) is electrically connected to the positive electrode of the battery and moreover is insulated from the battery canister by insulating material (33). The battery canister is fixed to some external apparatus by a fixture (35). The fixture (35) and the battery canister are kept in good mutual thermal contact either directly or via a protective film upon the battery canister.

Furthermore, in the protection circuit (a series circuit of a thermal switching element, diodes, and a resistance element (3)), the positive terminal (14) of this series circuit of the thermal switching element, the diodes, and the resistance element (3) is electrically connected to the positive electrode tab (32) by a wire (34). Moreover, the negative terminal (15) of this series circuit of the thermal switching element, the diodes, and the resistance element (3) is electrically connected to the positive electrode tab (32) by another wire. And the series circuit of the thermal switching element, the diodes, and the resistance element (3) is thermally connected to the battery canister by being installed upon the fixture (35).

Again, by installing the protection circuit in this manner, it is possible to sense the temperature state of the battery in an effective manner.

<Embodiment 6>

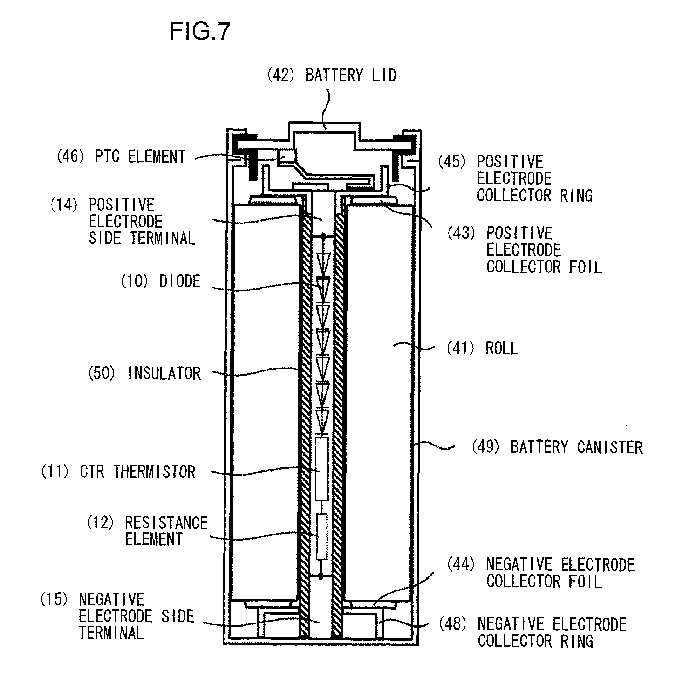

Fig. 7 shows another reference example of a position where the protection circuit may be installed, in a sixth embodiment of the present invention. Fig. 7 is a sectional view of a cylindrical battery. In this reference example, the protection circuit is installed in the interior of the battery canister.

A winding body (41) is constructed by winding up the positive electrode and the negative electrode one another so that they closely oppose one another with a separator between them, and a positive electrode collector foil (43) projects from this winding body (41) in the direction of the battery lid (42) while a negative electrode collector foil (44) projects therefrom in the direction of the bottom portion of the battery canister (49). The positive electrode collector foil (43) is electrically connected to the battery lid (42) via a positive electrode collector ring (45) and a PTC element (46).

And the negative electrode collector foil (44) is electrically connected to the battery canister (49) via a negative electrode collector ring (48).

In the protection circuit of this sixth embodiment as described above, the series circuit of the positive terminal (14), PN diodes (10), a thermal switching element constituted by a CTR thermistor (11), a resistance element (12), and the negative terminal (15) is installed in the axial interior of the winding body (41). The positive terminal (14) is connected to the positive electrode collector ring (45). Moreover, the negative terminal (15) is connected to the battery canister (49). Since the outer surface of this series circuit is covered by an insulator (50), the PN diodes (10), the CTR thermistor (11), and the resistance element (12) do not contact the electrolyte. Furthermore, this protection circuit is thermally integrated with the interior of the battery.

With a structure such as that shown in Fig. 7 as well, a mechanism is provided for spontaneous electrical discharge when the battery is at high temperature and also at high voltage.

While various embodiments of the present invention have been explained above, the present invention is not to be considered as being limited to those embodiments. Various changes may be made in relation to various aspects of the present invention provided that its main concept is not departed from, and these may be determined in any appropriate manner according to the nature of the application.

As shown by the embodiments described above, according to the present invention there is provided a mechanism that spontaneously electrically discharges the lithium ion secondary battery when it is at high temperature, thus further reducing the possibility to exceed a predetermined temperature.

The present invention is a protection circuit that includes a thermal switching element connected in parallel with the lithium ion secondary battery, with the electrical resistance of the thermal switching element decreasing along with increase of its temperature, so that, by the provision of this mechanism that spontaneously electrically discharges the lithium ion secondary battery, it is possible further to reduce the possibility to exceed a predetermined temperature.

Furthermore, in the protection circuit of the present invention, a series circuit of the thermal switching element and at least one diode, which is connected in parallel with the lithium ion secondary battery, and the anode end of the series circuit is connected to the positive electrode side of the lithium ion secondary battery while its cathode end is connected to the negative electrode side of the secondary battery, and this provides a mechanism whereby, at or above a predetermined temperature, the lithium ion secondary battery spontaneously electrically discharges down to a predetermined voltage; and accordingly, along with reducing the possibility to exceed a predetermined temperature, also it is possible to prevent excessive electrical discharge.

Furthermore, in the above mentioned series circuit of a thermal switching element and at least one diode, according to the characteristics of the diodes, a plurality of diodes are connected in series to achieve a spontaneous discharge of the lithium ion secondary battery until a predetermined voltage is reached, where the number of the diodes is corresponding to this predetermined voltage.

Yet further, in the protection circuit of the present invention, it is desirable to employ a thermal switching element that is a critesistor (i.e. a CTR thermistor) whose electrical resistance decreases abruptly at or above a predetermined temperature, or a thermal switching element that is a negative temperature coefficient thermistor (i.e. a NTR thermistor) that has a negative temperature coefficient, or a thermal switching element that is a bimetallic thermostat that goes to ON at or above a predetermined temperature.

Even further, the protection circuit of the present invention may include a circuit in which at least one resistance element is connected in series with the thermal switching element and the diode(s), connected in parallel with the lithium ion secondary battery. The rate of flow of current through the protection circuit may be adjusted with this resistance element, and this is done in order to be able to prevent destruction of the protection circuit.

Still further, it may be arranged for a thermal switching element that goes to OFF at or above a predetermined temperature to be connected in series with the parallel circuit of the lithium ion secondary battery and the protection circuit. By providing this mechanism by which this thermal switching element goes to OFF at or above the predetermined temperature, the lithium ion secondary battery and the protection circuit constitute a closed circuit at or above the predetermined temperature, so that it is possible reliably to discharge the lithium ion secondary battery that is equipped with this protection circuit down to the predetermined voltage..

As has been explained above, according to the present invention, a protection circuit is provided that includes a mechanism that spontaneously electrically discharges the lithium ion secondary battery down to a predetermined voltage if it is at or above a predetermined temperature, so that it becomes possible further to reduce the possibility to exceed a predetermined temperature of this lithium ion secondary battery.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

**Claims**

1. A protection circuit of a secondary battery, comprising a thermal switching element which has an resistance that decreases along with increase of temperature and which is connected in parallel with the secondary battery (1).

2. A protection circuit of a secondary battery according to Claim 1, further comprising at least one diode (10) electrically connected in series with the thermal switching element.

3. A protection circuit of a secondary battery according to Claim 1 or Claim 2, further comprising at least one resistance element electrically connected in series with the thermal switching element

4. A protection circuit of a secondary battery according to any one of Claims 1 through 3, wherein the thermal switching element is a critesistor whose electrical resistance decreases abruptly at or above a predetermined temperature.

5. A protection circuit of a secondary battery according to any one of Claims 1 through 3, wherein the thermal switching element is a negative temperature coefficient thermistor that has a negative temperature coefficient.

6. A protection circuit of a secondary battery according to any one of Claims 1 through 3, wherein the thermal switching element is a bimetallic thermostat that goes to ON at or above a predetermined temperature.

7. A protection circuit of secondary battery according to any one of Claims 1 through 6, wherein the thermal switching element is provided in the interior of a battery case.

8. A protection circuit of a secondary battery according to Claim 2, wherein a plurality of the diodes (10) necessary to achieve a predetermined discharge termination voltage for the secondary battery (1) during operation of the protection circuit.

9. A protection circuit of secondary battery according to Claim 3, wherein said resistance element has a resistance value that defines a predetermined discharge current of the secondary battery (1) during operation of the protection circuit.

10. A secondary battery comprising, internal to the battery case, a battery case and a secondary battery circuit according to any one of Claims 1 through 9.

FIG.1

(17) NEGATIVE TERMINAL
OF EXTERNAL CIRCUIT

(16) POSITIVE TERMINAL
OF EXTERNAL CIRCUIT

(13) PTC THERMISTOR

(10) PN DIODE

(15) NEGATIVE TERMINAL

(14) POSITIVE TERMINAL

(11) CTR THERMISTOR

(12) RESISTANCE
ELEMENT

(1) LITHIUM ION
SECONDARY BATTERY

10

FIG.2

## FIG.3

(17) NEGATIVE TERMINAL OF EXTERNAL CIRCUIT

(16) POSITIVE TERMINAL OF EXTERNAL CIRCUIT

(13) PTC THERMISTOR

(10) PN DIODE

(15) NEGATIVE TERMINAL

(14) POSITIVE TERMINAL

(18) NTC THERMISTOR

(1) LITHIUM ION SECONDARY BATTERY

## FIG.4

(17) NEGATIVE TERMINAL OF EXTERNAL CIRCUIT

(16) POSITIVE TERMINAL OF EXTERNAL CIRCUIT

(13) PTC THERMISTOR

(10) PN DIODE

(15) NEGATIVE TERMINAL

(14) POSITIVE TERMINAL

(19) BIMETALLIC THERMAL SWITCH

(12) RESISTANCE ELEMENT

(1) LITHIUM ION SECONDARY BATTERY

FIG.5

(2b) PTC THERMISTOR

(24) WIRING

(23) INSULATION MATERIAL

(2a) SERIES CIRCUIT OF THERMAL SWITCHING ELEMENT, DIODE, AND RESISTANCE ELEMENT

(22) POSITIVE ELECTRODE TAB

(21) BATTERY CANISTER (CONNECTED TO NEGATIVE ELECTRODE)

FIG.6

(3) SERIES CIRCUIT OF THERMAL SWITCHING ELEMENT, DIODE, AND RESISTANCE ELEMENT

(34) WIRING

(32) POSITIVE ELECTRODE TAB

(33) INSULATION MATERIAL

(35) FIXTURE

(31) NEGATIVE ELECTRODE TAB

FIG.7

(42) BATTERY LID

(46) PTC ELEMENT

(45) POSITIVE ELECTRODE COLLECTOR RING

(14) POSITIVE ELECTRODE SIDE TERMINAL

(43) POSITIVE ELECTRODE COLLECTOR FOIL

(10) DIODE

(50) INSULATOR

(41) ROLL

(11) CTR THERMISTOR

(49) BATTERY CANISTER

(12) RESISTANCE ELEMENT

(44) NEGATIVE ELECTRODE COLLECTOR FOIL

(15) NEGATIVE ELECTRODE SIDE TERMINAL

(48) NEGATIVE ELECTRODE COLLECTOR RING

Europäisches
Patentamt

European
Patent Office

Office européen
des brevets

## EUROPEAN SEARCH REPORT

Application Number

EP 10 17 3259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/001844 A1 (MITSUMI ELECTRIC CO [JP]; TAKEDA TAKASHI [JP]) 31 December 2008 (2008-12-31) * claims 1,3 * | 1,3-5,7, 9,10 | INV. H01M10/50 H01M10/42 H01M10/44 |
| X | US 6 891 353 B2 (TSUKAMOTO HISASHI [US] ET AL) 10 May 2005 (2005-05-10) * figure 6 * * column 9, lines 34-36 * | 1,3,4,6, 9,10 | |
| X | EP 0 477 908 A2 (SONY CORP [JP]) 1 April 1992 (1992-04-01) * page 4, line 49 - page 5, line 8 * * figures 1,2 * | 1-10 | |

TECHNICAL FIELDS
SEARCHED      (IPC)

H01M

The present search report has been drawn up for all claims

| Place of search | Date of completion of the search | Examiner |
|---|---|---|
| The Hague | 13 April 2011 | Martins Lopes, Luis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 17 3259

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2011

| Patent document cited in search report | | Publication date | Patent family member(s) | | Publication date |
|---|---|---|---|---|---|
| WO 2009001844 | A1 | 31-12-2008 | JP 2009005559 A | | 08-01-2009 |
| | | | KR 20100005104 A | | 13-01-2010 |
| | | | US 2010201327 A1 | | 12-08-2010 |
| US 6891353 | B2 | 10-05-2005 | US 2004004464 A1 | | 08-01-2004 |
| EP 0477908 | A2 | 01-04-1992 | DE 69109987 D1 | | 29-06-1995 |
| | | | DE 69109987 T2 | | 30-11-1995 |
| | | | JP 2961853 B2 | | 12-10-1999 |
| | | | JP 4137371 A | | 12-05-1992 |
| | | | US 5252411 A | | 12-10-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009296660 A
- JP 2009131023 A